# EUROPEAN PATENT SPECIFICATION

(11) **EP 4 361 986 B1**
(45) Date of publication and mention of the grant of the patent: **11.11.2026**
(21) Application number: 23173103.5
(22) Date of filing: 12.05.2023
(51) Int. Cl.: G08B 21/24, G08B 21/22

(54) **REAR SEAT PASSENGER NOTIFICATION DEVICE AND A METHOD THEREFOR**
RÜCKSITZPASSAGIERBENACHRICHTIGUNGSVORRICHTUNG UND VERFAHREN DAFÜR
DISPOSITIF DE NOTIFICATION DE PASSAGER DE SIÈGE ARRIÈRE ET PROCÉDÉ ASSOCIÉ

(30) Priority: 31.10.2022 KR 20220142989
(43) Date of publication of application: 01.05.2024
(73) Proprietor: HYUNDAI MOTOR COMPANY, Seoul 06797 (KR); Kia Corporation, Seocho-gu Seoul 06797 (KR)
(72) Inventor: JEON, Seul Ki, 18280 Hwaseong-si, Gyeonggi-do (KR); SHIN, Hui Won, 18280 Hwaseong-si, Gyeonggi-do (KR); KIM, Eung Hwan, 18280 Hwaseong-si, Gyeonggi-do (KR)
(74) Representative: Viering, Jentschura & Partner mbB Patent- und Rechtsanwälte

(56) References cited:
- DE-A1- 102020 126 539
- US-A1- 2014 253 314
- US-A1- 2021 362 673
- US-A1- 2021 370 860

## Description

### TECHNICAL FIELD

The present disclosure relates to a rear seat passenger notification device and a method therefor.

### BACKGROUND

Situations in which a user of a host vehicle leaves children in the host vehicle due to lack of attention or unavoidable circumstances often occur. Such situations may cause major problems, especially during summer months.

For example, children and the like may suffocate due to an increase in the interior temperature of the host vehicle if the children are left in the interior of the host vehicle for a long time. Because accidents of this type are not intended by the user of the host vehicle and are generally caused by momentary negligence and a moment of carelessness, most accidents may be prevented when an alarm is provided under certain conditions.

Many technologies have been proposed to cope with dangerous accidents in the parked host vehicle. For example, technologies of measuring the interior temperature of the host vehicle to open a window of a door of the host vehicle, operate an air conditioner of the host vehicle, or generate an alarm are provided in the host vehicle when the host vehicle is manufactured.

However, because the functions uniformly control the interior environment without considering the location of the user of the host vehicle or information about the exterior environment, there may be a risk of malfunction. Furthermore, because the accuracy of an interior detection process for providing a function may be degraded or it may be difficult to determine whether to execute various functions to be adaptive to the user, availability is slightly reduced.

From DE 10 2020 126539 A1 a rear seat passenger notification device is known, which comprises: a sensor device configured to identify information about at least one passenger who is present in a host vehicle when the host vehicle enters a lock state, the information including an age group of the at least one passenger; an alarm device configured to perform a visual and audible alarm function including at least one of a visual alarm function, an audible alarm function, or a combination thereof, when it is identified that the information about the at least one passenger meets a specified condition including a detection intensity; an information collection device configured to collect information about the host vehicle and information about a user of the host vehicle when it is identified that the information about the at least one passenger meets the specified condition; an information collection device configured to collect information about the host vehicle and information about a user of the host vehicle when it is identified that the information about the at least one passenger meets the specified condition; and a control device configured for control of the host vehicle. From US 2021/370860 A1 a rear seat passenger notification device is known, comprising: a sensor device configured to identify information about at least one passenger who is present in a host vehicle, the information including at least one of a location where the at least one passenger is seated, a state where the at least one passenger is seated, an age group of the at least one passenger, or a combination thereof; an alarm device configured to perform a visual and audible alarm function including at least one of a visual alarm function, an audible alarm function, or a combination thereof, when it is identified that the information about the at least one passenger meets a specified condition including at least one of a detection area, a detection intensity, a detection height, or a combination thereof; an information collection device configured to collect information about the host vehicle and information about a user of the host vehicle; and an action determination and control device configured to: identify, based on at least one of the information about the at least one passenger, the information about the host vehicle, the information about the user, or a combination thereof, at least one action item for control of the host vehicle. A further rear seat passenger notification device is known from US 2021/3672673 A1. From US 2014/253314 A1 a child safety seat is known, which can be installed in a rear seat and which detects whether a buckle of the child safety seat is latched and detects the distance of a mobile device of a user, wherein an alarm function is activated when the buckle is fully latched and the distance is greater than a threshold.

### SUMMARY

The present disclosure has been made to solve the above-mentioned problems occurring in the prior art while advantages achieved by the prior art are maintained intact.

An object of the present disclosure is providing a rear seat passenger notification device and a corresponding method for identifying information about an interior and/or exterior environment of a host vehicle using a sensor device and adaptively identifying an action item for safety of a passenger based on the identified result, and a method therefor.

Another object of the present disclosure is providing a rear seat passenger notification device and a corresponding method for visually and/or audibly providing an alarm function for a remaining situation of a passenger using an alarm device and further considering a separation distance between the host vehicle and the user to provide an alarm function in various manners, and a method therefor.

Another object of the present disclosure is providing a rear seat passenger notification device and a corresponding method for collecting at least one of information about the host vehicle, information of the user of the host vehicle, or a combination thereof in a complex manner using an information collection device and suitably identifying and providing an action item using the collected information, and a method therefor.

The technical problems to be solved by the present disclosure are not limited to the aforementioned problems, and any other technical problems not mentioned herein will be clearly understood from the following description by those having ordinary skill in the art to which the present disclosure pertains.

These objects are solved by a rear seat passenger notification method according to claim 1 and by a rear seat passenger notification device according to claim 5. Further embodiments are subject of the dependent claims.

### BRIEF DESCRIPTION OF THE DRAWINGS

The above and other objects, features and advantages of the present disclosure may be more apparent from the following detailed description taken in conjunction with the accompanying drawings, in which:
FIG. 1 is a block diagram illustrating components of a rear seat passenger notification device according to an embodiment of the present disclosure;
FIG. 2 is a conceptual diagram of an operation of a rear seat passenger notification device according to an embodiment of the present disclosure;
FIG. 3 is a flowchart depicting operations that may be performed by a rear seat passenger notification device according to an embodiment of the present disclosure;
FIG. 4 is a flowchart depicting operations that may be performed by a rear seat passenger notification device according to another embodiment of the present disclosure;
FIG. 5 is a conceptual diagram for dividing a host vehicle into a plurality of areas sensed by a sensor device, according to an embodiment of the present disclosure;
FIG. 6 is a conceptual diagram for dividing a host vehicle into a plurality of areas sensed by a sensor device, according to another embodiment of the present disclosure;
FIG. 7 is a conceptual diagram for dividing a host vehicle into a plurality of areas sensed by a sensor device, according to yet another embodiment of the present disclosure;
FIG. 8 is a flowchart depicting operations that may be performed by a rear seat passenger notification device according to an embodiment of the present disclosure; and
FIG. 9 is a block diagram illustrating a computing system according to an embodiment of the present disclosure.

With regard to description of drawings, the same or similar denotations may be used for the same or similar components.

### DETAILED DESCRIPTION

Hereinafter, embodiments of the present disclosure are described in detail with reference to the accompanying drawings. In the accompanying drawings, the same reference numerals are used throughout to designate the same or similar elements. In addition, a detailed description of well-known features or functions may be omitted in order not to unnecessarily obscure the gist of the present disclosure.

In describing the components of the embodiment according to the present disclosure, terms such as first, second, "A", "B", (a), (b), and the like may be used. These terms are only used to distinguish one element from another element, but do not limit the corresponding elements irrespective of the order or priority of the corresponding elements. Furthermore, unless otherwise defined, all terms including technical and scientific terms used herein are to be interpreted as is customary in the art to which the present disclosure belongs. Such terms as those defined in a generally used dictionary are to be interpreted as having meanings equal to the contextual meanings in the relevant field of art, and are not to be interpreted as having ideal or excessively formal meanings unless clearly defined as having such in the present application.

When a component, device, element, or the like of the present disclosure is described as having a purpose or performing an operation, function, or the like, the component, device, or element should be considered herein as being "configured to" meet that purpose or perform that operation or function.

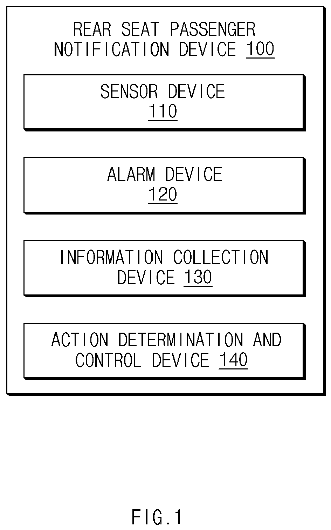

Hereinafter, embodiments of the present disclosure are described in detail with reference to FIGS. 1 to 9.

FIG. 1 is a block diagram illustrating components of a rear seat passenger notification device according to an embodiment of the present disclosure.

Referring to FIG. 1, a rear seat passenger notification device 100 according to an embodiment of the present disclosure may be implemented in a vehicle. For example, the rear seat passenger notification device 100 may be integrally configured with control units in the vehicle or may be implemented as a separate device to be connected with the control units of the vehicle by a separate connection means.

The rear seat passenger notification device 100 includes a sensor device 110, an alarm device 120, an information collection device 130, and an action determination and control device 140. The components of the rear seat passenger notification device 100, which are shown in FIG. 1, are illustrative, and embodiments of the present disclosure are not limited to only having these components. For example, the rear seat passenger notification device 100 may further include components not shown in FIG. 1.

According to an embodiment, the sensor device 110 may include a plurality of sensors which obtain various pieces of information about the interior and/or exterior of a host vehicle.

The sensor device 110 may obtain various pieces of interior information of the host vehicle. Especially, when the host vehicle enters a lock state, the sensor device 110 identifies information about at least one passenger who is present in the host vehicle. The information about the at least on passenger who is present in the host vehicle includes at least one of a location where the at least one passenger is seated, an age group of the at least one passenger, or a combination thereof.

The sensor device 110 may separately identify each of a plurality of areas logically divided in the interior of the host vehicle. For example, the sensor device 110 may include at least one rear occupant alert (ROA) sensor that divides and identifies the interior of the host vehicle into a plurality of areas for each sitting seat. The sensor device 110 may divide the interior of the host vehicle into the plurality of areas based on a field of view (FOV) of at least one sensor included in the sensor device 110 and may identify information about the at least one passenger with respect to each of the plurality of areas.

In an embodiment, the sensor device 110 may include at least one camera that obtains exterior information of the host vehicle. The at least one camera may capture an area in front of the host vehicle, an area behind the host vehicle, and an area at a side of the host vehicle to obtain exterior information about the host vehicle. For example, the sensor device 110 may identify that an external user adjacent to the host vehicle approaches the host vehicle using the at least one camera.

The alarm device 120 can perform various types of alarm functions.

For example, the alarm device 120 may perform a visual alarm function using headlights of the host vehicle.

As another example, the alarm device 120 may perform an audible alarm function using a speaker of the host vehicle.

Especially, when it is identified that the information about the at least one passenger meets a specified condition, the alarm device 120 performs a visual and audible alarm function. The specified condition includes at least one of a detection area, a detection height, or a combination thereof. The visual and audible alarm function is defined as an alarm function including at least one of a visual alarm function, an audible alarm function, or a combination thereof.

The alarm device 120 performs the visual and audible alarm function when it is identified that the at least one passenger includes a child based on whether at least one of the detection area, the detection height, or the combination thereof included in the specified condition is met. As used herein, "child" may include an infant, a toddler, or a kid who is a little older (e.g., age between 5 and 66 months).

In an example, when it is identified that a separation distance between the user and the host vehicle is less than a specified distance, the alarm device 120 may gradually strengthen and repeatedly perform the visual and audible alarm function. The rear seat passenger notification device 100 identifies the separation distance between the user and the host vehicle, and may do so based on wireless communication with a terminal of the user. The specified distance may be a predetermined distance or a setting value changeable by control of the user. For example, when the separation distance is less than 10 m, the rear seat passenger notification device 100 may gradually strengthen and repeatedly perform the visual and audible alarm function using the alarm device 120. The above-mentioned separation distance is a numerical example, and embodiments of the present disclosure are not limited thereto.

According to an embodiment, the information collection device 130 may collect various pieces of information about the host vehicle and/or the user.

Especially, when it is identified that the information about the at least one passenger meets the specified condition, the information collection device 130 collects information about the host vehicle and information about the user of the host vehicle.

Especially, when it is identified that the at least one passenger includes a child based on whether at least one of the detection area, the detection height, or the combination thereof included in the specified condition is met, the information collection device 130 collects the separation distance between the user and the host vehicle. As an example, the information collection device 130 may collect the separation distance between the host vehicle and the user based on wireless communication with the user. As another embodiment, the information collection device 130 may collect location information of the user based on wireless communication with the user. As yet another embodiment, the information collection device 130 may collect interior temperature information of the host vehicle using at least one sensor included in the sensor device 110. As still another embodiment, the information collection device 130 may collect location information of the host vehicle using a global positioning system (GPS).

The action determination and control device 140 identifies and provides an action item to the user.

Especially, the action determination and control device 140 identifies, based on at least one of the information about the at least one passenger, the information about the host vehicle, the information about the user, or the combination thereof, at least one action item for control of the host vehicle, and provides the user with the at least one action item. The at least one action item may include at least one of control of air conditioning of the host vehicle, control of starting of the host vehicle, control of at least one window of the host vehicle, control of at least one door of the host vehicle, communication with a terminal of the user, digital key transmission to a terminal of an external user adjacent to the host vehicle, or a combination thereof.

Especially, when it is identified that the separation distance between the user and the host vehicle is greater than the specified distance (e.g., 10 m), the action determination and control device 140 transmits a user interface including at least one action item for control of the host vehicle to the terminal of the user. The user interface includes application screen information to execute the control of the host vehicle, which includes at least one of control of air conditioning of the host vehicle, control of starting of the host vehicle, control of at least one window of the host vehicle, control of at least one door of the host vehicle, digital key transmission, or a combination thereof.

In an embodiment, when the interior temperature of the host vehicle is greater than or equal to or is less than a specified value, the action determination and control device 140 may provide the user with a function for adjusting the interior temperature.

In an embodiment, when it is identified that the interior temperature included in the information of the host vehicle is greater than or equal to a first temperature, the action determination and control device 140 may execute one of the control of the air conditioning of the host vehicle, the control of the at least one window of the host vehicle, the control of the at least one door of the host vehicle, or the combination thereof, and may provide the user with a control function, such that the interior temperature decreases.

On the other hand, when it is identified that the interior temperature included in the information of the host vehicle is less than a second temperature lower than the first temperature, the action determination and control device 140 may execute one of the control of the air conditioning of the host vehicle, the control of the at least one window of the host vehicle, the control of the at least one door of the host vehicle, or the combination thereof and may provide the user with the control function, such that the interior temperature increases.

In an embodiment, when it is identified, by means of adjacent information that is included in the information about the host vehicle, that an external user is present adjacent to the host vehicle, the action determination and control device 140 may transmit a digital key of the host vehicle to the terminal of the external user. The identified external user may be an outsider who may provide cooperation for at least one passenger left in the host vehicle. Thus, the action determination and control device 140 may transmit the digital key of the host vehicle to the terminal of the external user and may hand over control authority of the host vehicle to the external user.

In an embodiment, the action determination and control device 140 may identify a location where the at least one passenger is seated among the plurality of areas in the interior of the host vehicle and may provide the user with at least one action item to execute at least one of air conditioning control, window control, door control, or a combination thereof in an area adjacent to the location.

In an embodiment, when it is identified that the external user adjacent to the host vehicle approaches the host vehicle, the action determination and control device 140 may preemptively continue setting all doors of the host vehicle to a lock state and may transmit information about the external user to the terminal of the user The external user identified as approaching the host vehicle may be, for example, a trespasser on the host vehicle. Thus, the action determination and control device 140 may identify the external user as the trespasser, may strengthen security of the host vehicle (e.g., set all the doors to the lock state), and may transmit information about the external user to the terminal of the user of the host vehicle.

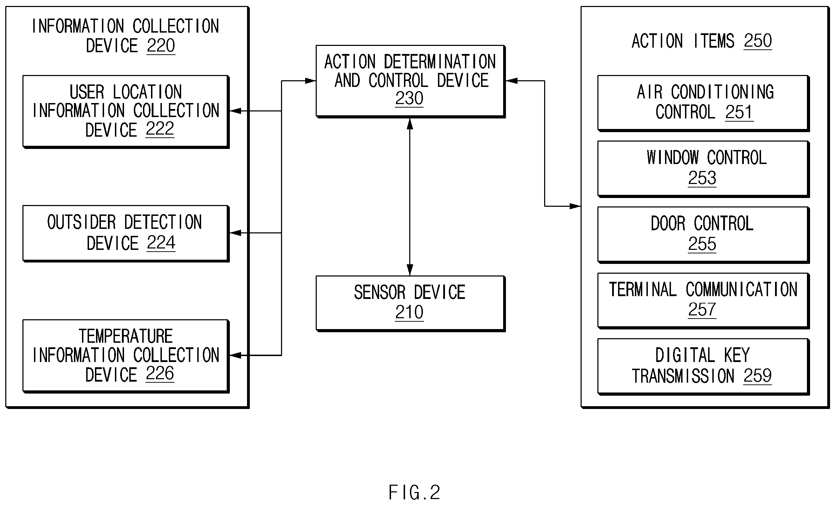

FIG. 2 is a conceptual diagram of an operation of a rear seat passenger notification device according to an embodiment of the present disclosure.

According to the invention, a rear seat passenger notification device (e.g., the rear seat passenger notification device 100 of FIG. 1) includes a sensor device 210 (e.g., the sensor device 110 of FIG. 1), an information collection device 220 (e.g., the information collection device 130 of FIG. 1), and an action determination and control device 230 (e.g., the action determination and control device 140 of FIG. 1). The action determination and control device 230 controls the sensor device 210 and the information collection device 220.

In an embodiment, the action determination and control device 230 may obtain various pieces of information about the interior of the host vehicle using the sensor device 210.

Especially, the sensor device 210 identifies at least one passenger who is present in the interior of the host vehicle based on control of the action determination and control device 230. The sensor device 210 may include, for example, at least one sensor (e.g., an ROA sensor) included in the interior of the host vehicle.

The sensor device 210 may identify whether at least one passenger is an adult or a child using the ROA sensor. As an example, the sensor device 210 may identify whether the at least one passenger is the adult or the child using at least one of an area where the detected passenger is detected, a signal to noise ratio (SNR) where the detected passenger is detected, a height where the detected passenger is detected, a location where breathing of the detected passenger occurs, or a combination thereof.

In an embodiment, the sensor device 210 may identify at least one passenger for each of a plurality of areas logically divided in the interior of the host vehicle.

In an embodiment, the action determination and control device 230 may obtain various pieces of information about the host vehicle, a user, and/or an outsider using the information collection device 220.

In an embodiment, the information collection device 220 may include a user location information collection device 222. The user location information collection device 222 may collect a location of the user based on wireless communication with a user terminal.

The information collection device 220 may include an outsider detection device 224. The outsider detection device 224 may identify an outsider adjacent to the host vehicle using at least one of a biometric sensor, a motion sensor, an acceleration sensor, or a combination thereof. In an embodiment, the outsider detection device 224 may separately identify an outsider adjacent to the host vehicle and/or an outsider who gradually approaches the host vehicle.

In an embodiment, the information collection device 220 may collect an interior temperature of the host vehicle using a temperature information collection device 226. The temperature information collection device 226 may identify the interior temperature of the host vehicle. The temperature information collection device 226 may identify whether the interior temperature of the host vehicle is greater than or equal to a specified value or is less than the specified value. In an embodiment, when it is identified that the interior temperature of the host vehicle is greater than or equal to a first temperature, the temperature information collection device 226 may deliver a signal that it is required to decrease the interior temperature to the action determination and control device 230. On the other hand, when it is identified that the interior temperature of the host vehicle is less than a second temperature lower than the first temperature, the temperature information collection device 226 may deliver a signal that it is required to increase the interior temperature to the action determination and control device 230.

Esepcially, the action determination and control device 230 identifies at least one of action items 250 based on the various pieces of information obtained by means of the sensor device 210 and/or the information collection device 220.

The action items 250 may include air conditioning control 251, window control 253, door control 255, terminal communication 257, and/or digital key transmission 259.

The air conditioning control 251 may include a control function of at least one air conditioning device (e.g., at least one of an air conditioner, a heater, an inner air circulation device, a dehumidifier, or a combination thereof) in the interior of the host vehicle.

The window control 253 may include an opening and closing control function of at least one window of the host vehicle. The user may control an opening and closing state of the window by means of the window control 253. For example, the user may completely close or open a window of the host vehicle by means of the window control 253 or may open the window of the host vehicle by a specified degree (e.g., 30%) by means of the window control 253.

The door control 255 may include an opening and closing control function of at least one door of the host vehicle. The user may selectively set at least one door of the host vehicle to a lock state by means of the door control 255.

The terminal communication 257 may include various data transmission and reception functions through communication with an external device (e.g., a terminal). The user may transmit and receive pieces of data associated with the action items 250 of the host vehicle to a terminal of the user and/or a terminal of the external user by means of the terminal communication 257.

The digital key transmission 259 may include a function of transmitting a digital key including control authority of the host vehicle to the external device (e.g., the terminal). When it is difficult for the user to immediately approach the host vehicle, the user may transmit a digital key to a terminal of the external user who is adjacent to the host vehicle and is capable of cooperating with a passenger of the host vehicle.

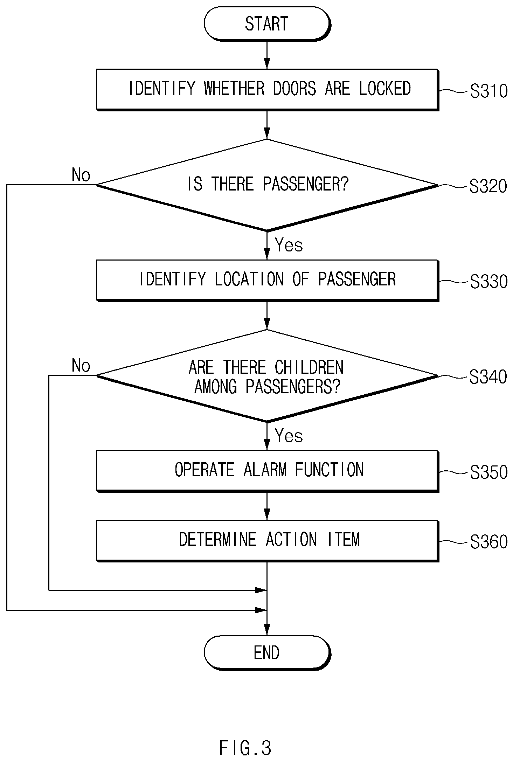

FIG. 3 is a flowchart depicting operation of a rear seat passenger notification device according to an embodiment of the present disclosure.

According to the invention, a rear seat passenger notification device (e.g., the rear seat passenger notification device 100 of FIG. 1) performs operations depicted in FIG. 3. At least some of components ( the sensor device 110, the alarm device 120, the information collection device 130, and the action determination and control device 140) included in the rear seat passenger notification device are configured to perform the operations of FIG. 3.

Operations S310 to S360 below are performed sequentially. Furthermore, contents, which correspond to or are duplicated with the contents described above in conjunction with FIG. 3, may be briefly described or omitted.

In an operation S310, the rear seat passenger notification device identifies whether doors are locked.

The rear seat passenger notification device identifies whether doors of a host vehicle correspond to a lock state.

In an operation S320, the rear seat passenger notification device identifies whether there is at least one passenger in the interior of the host vehicle.

The rear seat passenger notification device identifies whether there is at least one passenger in the interior (e.g., rear seat) of the host vehicle. In an example, the rear seat passenger notification device may identify whether there is at least one passenger in one of a plurality of areas logically divided in the interior of the host vehicle, using a sensor device.

Especially, when it is identified that there is the passenger (e.g., -"Yes" in the operation S320), the rear seat passenger notification device performs operation S330.

On the other hand, when it is identified that there is no passenger (e.g., -"No" in the operation S320), the rear seat passenger notification device may end the operation.

In an operation S330, the rear seat passenger notification device identifies a location of the passenger.

In an embodiment, the rear seat passenger notification device may identify a location (e.g., the driver's seat, a passenger seat, or a rear seat corresponding to the driver's seat or the passenger seat) using a plurality of sensors included in the interior of the host vehicle.

In an operation S340, the rear seat passenger notification device identifies whether there is a child among the at least one passenger in the host vehicle.

Especially, the rear seat passenger notification device identifies whether there are adults or children using at least one of an area where at least one passenger is detected, a height where the at least one passenger is detected, or a combination thereof.

Especially, when it is identified that there is a child among the at least one passenger (e.g., -"Yes" in the operation S340), the rear seat passenger notification device performs operation S350.

On the other hand, when it is identified that there are no children among the at least one passenger (e.g., -"No" in the operation S340), the rear seat passenger notification device may end the operation.

In an operation S350, the rear seat passenger notification device operates an alarm function.

For example, the rear seat passenger notification device may perform a visual alarm function using headlights of the host vehicle or may perform an audible alarm function using a speaker of the host vehicle.

Especially, when it is identified that the information about the at least one passenger meets a specified condition, the rear seat passenger notification device performs the visual and audible alarm function. The specified condition includes at least one of a detection area, a detection height, or a combination thereof. The visual and audible alarm function is defined as an alarm function including at least one of a visual alarm function, an audible alarm function, or a combination thereof.

Especially, when it is identified, based on whether at least one of the detection area, detection height, or the combination thereof included in the specified condition is met, that the at least one passenger includes a child, the rear seat passenger notification device performs the visual and audible alarm function.

In an operation S360, the rear seat passenger notification device determines an action item.

Especially, after operating the alarm function, the rear seat passenger notification device identifies at least one action item for control of the host vehicle.

The at least one action item includes at least one of control of air conditioning of the host vehicle, control of starting of the host vehicle, control of at least one window of the host vehicle, control of at least one door of the host vehicle, communication with a terminal of the user, digital key transmission to a terminal of an external user adjacent to the host vehicle, or a combination thereof.

Especially, the rear seat passenger notification device identifies at least one action item and provides the user with the at least one action item.

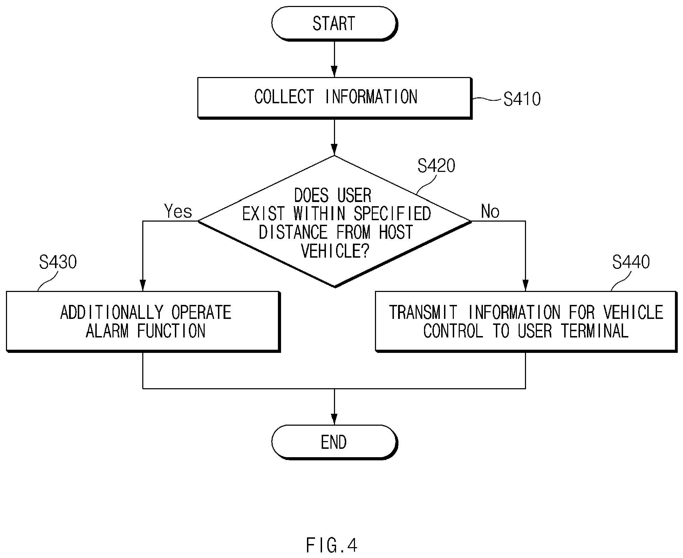

FIG. 4 is a flowchart depicting operations that may be performed by a rear seat passenger notification device according to another embodiment of the present disclosure.

According to an embodiment, a rear seat passenger notification device (e.g., the rear seat passenger notification device 100 of FIG. 1) may perform operations depicted in FIG. 4. For example, at least some of components (e.g., the sensor device 110, the alarm device 120, the information collection device 130, and the action determination and control device 140 of FIG. 1) included in the rear seat passenger notification device may be configured to perform the operations of FIG. 4.

Operations S410 to S440 below are sequentially performed. Furthermore, contents, which correspond to or are duplicated with the contents described above in conjunction with FIG. 4, may be briefly described or omitted.

In an operation S410, the rear seat passenger notification device collects information.

For example, the rear seat passenger notification device may collect information associated with at least one of a user, an outsider, or a combination thereof.

In various examples, the rear seat passenger notification device may collect location information of the user, information about the outsider who is adjacent to the host vehicle or approaches the host vehicle, and/or information about an interior temperature of the host vehicle.

In an operation S420, the rear seat passenger notification device identifies whether the user is within a specified distance from the host vehicle.

For example, the rear seat passenger notification device may identify location information of the user, and/or a separation distance between the user and the host vehicle, based on wireless communication with a terminal of the user.

In an embodiment, when it is identified that the separation distance between the user and the host vehicle is less than the specified distance (e.g., "Yes" in the operation S420), the rear seat passenger notification device may perform an operation S430.

On the other hand, when it is identified that the separation distance between the user and the host vehicle is greater than the specified distance (e.g., -"No" in the operation S420), the rear seat passenger notification device performs an operation S440.

According to an embodiment, when it is identified that the separation distance between the user and the host vehicle is less than the specified distance, the rear seat passenger notification device may additionally operate an alarm function in the operation S430.

For example, the rear seat passenger notification device may gradually strengthen and repeatedly perform the visual and audible alarm function. In an example, the rear seat passenger notification device may identify the separation distance between the user and the host vehicle based on wireless communication with the terminal of the user. The specified distance may be a predetermined distance or a setting value changeable by control of the user. In an example, when the separation distance is less than 10 m, the rear seat passenger notification device may gradually strengthen and repeatedly perform the visual and audible alarm function using an alarm device. The above-mentioned separation distance is a numerical example, and embodiments of the present disclosure are not limited thereto.

In the operation S440, the rear seat passenger notification device transmits information for vehicle control to the terminal of the user.

Especially, the rear seat passenger notification device transmits a user interface including at least one action item for control of the host vehicle to the terminal of the user. Especially, the user interface includes application screen information to execute at least one of control of air conditioning of the host vehicle, control of starting of the host vehicle, control of at least one window of the host vehicle, control of at least one door of the host vehicle, digital key transmission, or a combination thereof.

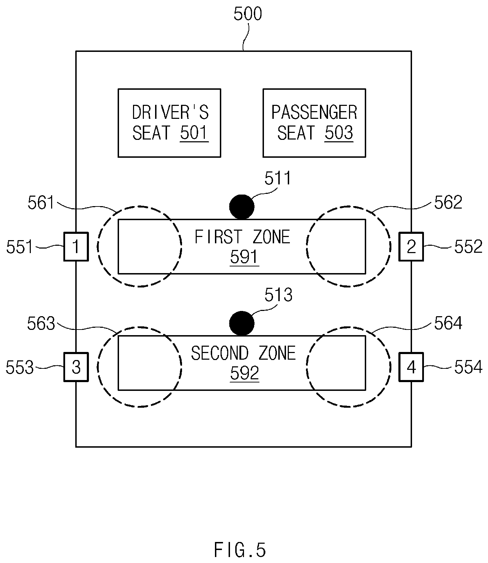

FIG. 5 is a conceptual diagram for dividing a host vehicle into a plurality of areas sensed by a sensor device, according to an embodiment of the present disclosure.

According to an embodiment, a host vehicle 500 may include a plurality of seats and zones in the interior.

For example, the host vehicle 500 may include front seats including a driver's seat 501 and a passenger seat 503 in the interior.

In an example, the host vehicle 500 may include rear seats including a first zone 591 and a second zone 592 in the interior.

In an example, a rear seat passenger notification device (e.g., the rear seat passenger notification device 100 of FIG. 1) may include a plurality of sensors (e.g., ROA sensors) which separately identify each of a plurality of areas.

For example, the rear seat passenger notification device may include a first sensor 511 disposed in an area adjacent to the first zone 591.

The first sensor 511 may separately identify information about at least one passenger who exists in each of a first area 561 and a second area 562 of the first zone 591.

The rear seat passenger notification device may include also a second sensor 513 disposed in an area adjacent to the second zone 592.

The second sensor 513 may separately identify information about at least one passenger who exists in each of a third area 563 and a fourth area 564 of the second zone 592.

According to an embodiment, the rear seat passenger notification device may provide a user with a function to selectively control components of the host vehicle 500 using the information about the at least one passenger that is obtained by the plurality of sensors.

For example, the rear seat passenger notification device may provide the user with a function to control a window adjacent to an area identified as including a child, among a first window 551, a second window 552, a third window 553, and a fourth window 554.

For example, when it is identified, by means of the first sensor 511, that a child is present in the first area 561, the rear seat passenger notification device may provide the user (or a terminal of the user) with a function to control opening and closing of the first window 551 adjacent to the first area 561.

The embodiment of controlling the opening and closing of the window is described in the above-mentioned example, but embodiments of the present disclosure are not limited thereto. For example, the rear seat passenger notification device may provide the user with a function to control opening and closing of a door adjacent to an area identified as including a child. As another example, the rear seat passenger notification device may provide the user with a function to control air conditioning of an area identified as including a child.

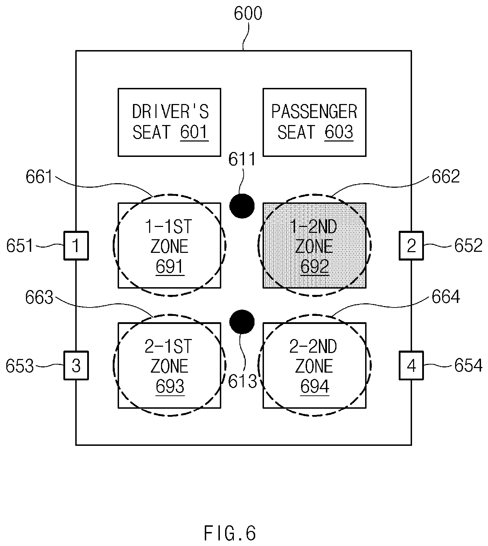

FIG. 6 is a conceptual diagram for dividing a host vehicle into a plurality of areas sensed by a sensor device, according to another embodiment of the present disclosure.

A description duplicated with the description of FIG. 5 in the description of FIG. 6 is replaced below with the above-mentioned description of FIG. 5.

According to an embodiment, a host vehicle 600 (e.g., the host vehicle 500 of FIG. 5) may include a plurality of seats and zones in the interior.

For example, the host vehicle 600 may include front seats including a driver's seat 601 and a passenger seat 603 in the interior.

In an example, the host vehicle 600 may include rear seats including a 1-1st zone 691, a 1-2nd zone 692, a 2-1st zone 693, and a 2-2nd zone 694 in the interior.

In an example, a rear seat passenger notification device (e.g., the rear seat passenger notification device 100 of FIG. 1) may include a plurality of sensors (e.g., ROA sensors) which separately identify each of a plurality of areas.

For example, the rear seat passenger notification device may include a first sensor 611 disposed in an area adjacent to the 1-1st zone 691 and the 1-2nd zone 692.

The first sensor 611 may separately identify information about at least one passenger who exists in each of a first area 661 included in the 1-1st zone 691 and a second area 662 included in 1-2nd zone 692.

The rear seat passenger notification device may also include a second sensor 613 disposed in an area adjacent to the 2-1st zone 693 and the 2-2 zone 694.

The second sensor 613 may separately identify information about at least one passenger who exists in each of a third area 663 of the 2-1st zone 693 and a fourth area 664 of the 2-2nd zone 694.

According to an embodiment, the rear seat passenger notification device may provide a user with a function to selectively control components of the host vehicle 600 using the information about the at least one passenger, which is obtained by the plurality of sensors.

For example, the rear seat passenger notification device may provide the user with a function to control a window adjacent to an area identified as including a child is, among a first window 651, a second window 652, a third window 653, and a fourth window 654.

In an example, when it is identified by means of the first sensor 611, that a child is present in the first area 661, the rear seat passenger notification device may provide the user (or a terminal of the user) with a function to control opening and closing of the first window 651 adjacent to the first area 661.

The embodiment of controlling the opening and closing of the window is described in the above-mentioned example, but embodiments of the present disclosure are not limited thereto. For example, the rear seat passenger notification device may provide the user with a function to control opening and closing of a door adjacent to an area identified as including a child. As another example, the rear seat passenger notification device may provide the user with a function to control air conditioning of an area identified as including a child.

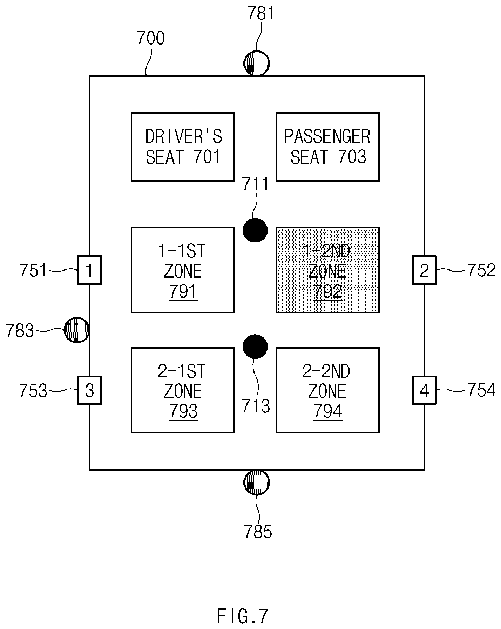

FIG. 7 is a conceptual diagram for dividing a host vehicle into a plurality of areas sensed by a sensor device, according to yet another embodiment of the present disclosure.

A description duplicated with the description of FIGS. 5 and 6 in the description of FIG. 7 is replaced below with the above-mentioned description of FIGS. 5 and 6.

According to an embodiment, a host vehicle 700 (e.g., the host vehicle 500 of Fig. 5 or the host vehicle 600 of FIG. 6) may include front seats including a driver's seat 701, a passenger seat 703, and rear seats including a 1-1st zone 791, a 1-2nd zone 792, a 2-1st zone 793, and a 2-2nd zone 794 in the interior.

In an example, a rear seat passenger notification device (e.g., the rear seat passenger notification device 100 of FIG. 1) may include a first sensor 711 and a second sensor 713, which separately identify each of a plurality of areas.

In an example, the rear seat passenger notification device may include at least one camera which identifies information about a front, a side, and a rear of the host vehicle 700. For example, the rear seat passenger notification device may include a front view camera 781, a side view camera 783, and a rear view camera 785.

According to an embodiment, the rear seat passenger notification device may provide a user with a function to selectively control components of the host vehicle 700 using exterior information of the host vehicle 700, which is obtained by the at least one camera.

For example, the rear seat passenger notification device may provide the user with a function to control a window corresponding to an external user adjacent to the host vehicle 700, among a first window 751, a second window 752, a third window 753, and a fourth window 754.

In an example, when it is identified, by means of the side view camera 783, that the external user (or a trespasser) approaches an area, of the host vehicle 700, that is adjacent to the 1-1st zone 791, the rear seat passenger notification device may close the first window 751 and may maintain a door corresponding to the first window 751 in a lock state.

In an example, when it is identified, by means of the side view camera 783, that the digital key including control authority of the host vehicle 700 is included in a terminal of the external user who approaches an area, of the host vehicle 700, that is adjacent to the 1-1st zone 791, the rear seat passenger notification device may open the first window 751 and may release the lock state of the door corresponding to the first window 751.

In an example, the rear seat passenger notification device may transmit information about the external user, which is obtained using the at least one camera, to the user terminal based on a specified period.

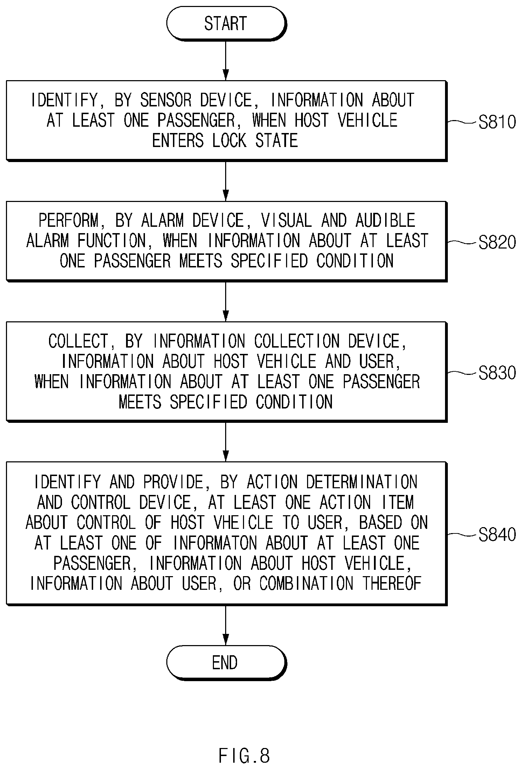

FIG. 8 is a flowchart depicting operations that are performed by a rear seat passenger notification device according to the present disclosure.

Especially, a rear seat passenger notification device (e.g., the rear seat passenger notification device 100 of FIG. 1) performs operations illustrated in FIG. 8. For example, at least some of components (e.g., the sensor device 110, the alarm device 120, the information collection device 130, and the action determination and control device 140 of FIG. 1) included in the rear seat passenger notification device may be configured to perform the operations of FIG. 8.

Operations S810 to S840 below are sequentially performed. Furthermore, contents, which correspond to or are duplicated with the contents described above in conjunction with FIG. 8, may be briefly described or omitted.

In an operation S810, when a host vehicle enters a lock state, a sensor device identifies information about at least one passenger in the host vehicle.

In an example, the sensor device may divide the interior of the host vehicle into a plurality of areas based on a field of view (FOV) of at least one sensor included in the sensor device and may identify information of at least one passenger with respect to each of the plurality of areas.

The sensor device may identify that an external user adjacent to the host vehicle approaches the host vehicle using at least one camera.

For example, the sensor device may include at least one camera that captures an area in front of the host vehicle, an area behind the host vehicle, and an area at a side of the host vehicle and at least one rear occupant alert (ROA) sensor which divides and identifies the interior of the host vehicle into a plurality of areas for each sitting seat.

In an operation S820, when it is identified that the information about the at least one passenger meets a specified condition, an alarm device performs a visual and audible alarm function.

Especially, when it is identified, based on whether at least one of a detection area, a detection height, or a combination thereof included in the specified condition is met, that the at least one passenger includes a child, the alarm device performs the visual and audible alarm function.

In an example, when it is identified that a separation distance between the user and the host vehicle is less than a specified distance, the alarm device may gradually strengthen and repeatedly perform the visual and audible alarm function.

In an operation S830, when it is identified that the information about the at least one passenger meets the specified condition, an information collection device collects information about the host vehicle and information about the user of the host vehicle.

Especially, when it is identified, based on whether at least one of the detection area, the detection height, or the combination thereof included in the specified condition is met, that the at least one passenger includes a child, the information collection device collects the separation distance between the user and the host vehicle.

In an operation S840, an action determination and control device identifies at least one action item for control of the host vehicle, based on at least one of information about the at least one passenger, information about the host vehicle, information about the user, or a combination thereof, and provides the user with the at least one action item.

Especially, when it is identified that the separation distance is greater than the specified distance, the action determination and control device transmits a user interface including the at least one action item for the control of the host vehicle to a terminal of the user. The at least one action item includes at least one of control of air conditioning of the host vehicle, control of starting of the host vehicle, control of at least one window of the host vehicle, control of at least one door of the host vehicle, communication with the terminal of the user, digital key transmission to a terminal of an external user adjacent to the host vehicle, or a combination thereof.

In an example, when it is identified that the interior temperature included in the information of the host vehicle is greater than or equal to a first temperature, the action determination and control device may provide the user with a user interface to execute one of the control of the air conditioning of the host vehicle, the control of the at least one window of the host vehicle, the control of the at least one door of the host vehicle, or the combination thereof such that the interior temperature decreases. On the other hand, when it is identified that the interior temperature included in the information of the host vehicle is less than a second temperature low than the first temperature, the action determination and control device may provide the user with a user interface to execute one of the control of the air conditioning of the host vehicle, the control of the at least one window of the host vehicle, the control of the at least one door of the host vehicle, or the combination thereof such that the interior temperature increases.

In an example, when it is identified, by means of adjacent information included in the information of the host vehicle, that there is an external user adjacent to the host vehicle, the action determination and control device may transmit a digital key of the host vehicle to the terminal of the external user.

In an example, the action determination and control device may identify a location where the at least one passenger is seated among the plurality of areas and may provide the user with at least one action item to execute at least one of air conditioning control, window control, door control, or a combination thereof in an area adjacent to the location.

In an example, the action determination and control device may continue setting all doors of the host vehicle to a lock state and may transmit information about the external user to the terminal of the user.

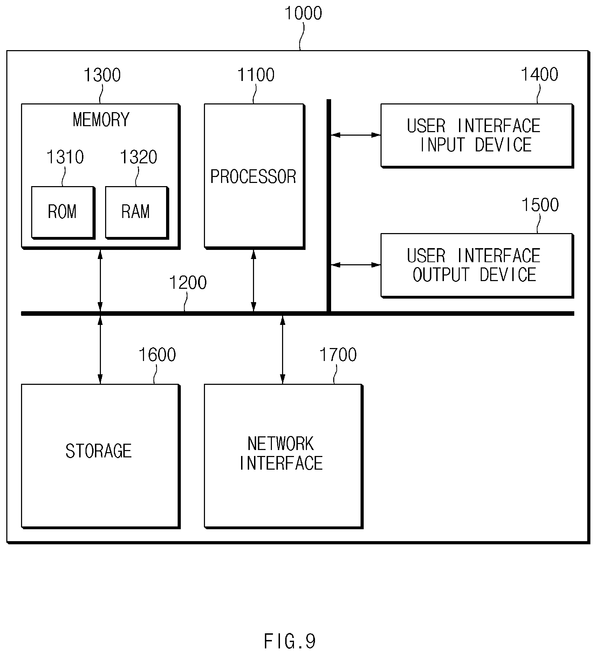

FIG. 9 illustrates a computing system that may perform a rear seat passenger notification method according to the present disclosure.

Referring to FIG. 9, a computing system 1000 that may perform the rear seat passenger notification method includes at least one processor 1100, a memory 1300, and may additionally include a user interface input device 1400, a user interface output device 1500, storage 1600, and a network interface 1700, which are connected with each other via a bus 1200.

The processor 1100 may be a central processing unit (CPU) or a semiconductor device that processes instructions stored in the memory 1300 and/or the storage 1600. The memory 1300 and the storage 1600 may include various types of volatile or non-volatile storage media. For example, the memory 1300 may include a ROM (Read Only Memory) 1310 and a RAM (Random Access Memory) 1320.

Accordingly, the operations of the method or algorithm described in connection with the embodiments disclosed in the specification may be directly implemented with a hardware module, a software module, or a combination of the hardware module and the software module, which is executed by the processor 1100. The software module may reside on a storage medium (e.g., the memory 1300 and/or the storage 1600) such as a RAM, a flash memory, a ROM, an EPROM, an EEPROM, a register, a hard disc, a removable disk, and a CD-ROM.

The storage medium may be coupled to the processor 1100. The processor 1100 may read out information from the storage medium and may write information in the storage medium. Alternatively, the storage medium may be integrated with the processor 1100. The processor and the storage medium may reside in an application specific integrated circuit (ASIC). The ASIC may reside within a user terminal. In another case, the processor and the storage medium may reside in the user terminal as separate components.

Various effects of a rear seat passenger notification device and a method therefor, according to at least some embodiments of the present disclosure, are provided below.

In at least one of embodiments of the present disclosure, a rear seat passenger notification device may selectively identify an action item required for a host vehicle using a plurality of sensors (e.g., at least one of a rear occupant alert (ROA) sensor, a camera, a combination thereof) included in a sensor device.

In at least some embodiments of the present disclosure, the rear seat passenger notification device may provide an efficient and safe rear seat passenger notification function as a user of the host vehicle selectively execute a visual and audible alarm function or executes the visual and audible alarm function in various modes, depending on a distance separated from the host vehicle.

In at least some embodiments of the present disclosure, the rear seat passenger notification device may collect an exterior and/or interior environment of the host vehicle in real time, when there is the user of the host vehicle at a distance relatively away from the host vehicle, and provides a user interface about a control function of the host vehicle, which is suitable for the terminal of the user, thus increasing availability.

In at least some embodiments of the present disclosure, the rear seat passenger notification device may control the host vehicle such that an optimal control function is able to be executed for each area as the sensor device divides and senses the interior of the host vehicle into a plurality of areas depending on a sitting location or a sitting state.

In addition, various effects ascertained directly or indirectly through the present disclosure may be provided.

Hereinabove, although the present disclosure has been described with reference to example embodiments and the accompanying drawings, the present disclosure is not limited thereto. Instead, the present invention is defined by the accompanying claims.

## Claims

1. A rear seat passenger notification method, comprising sequentially:
identifying whether a host vehicle enters a lock state (S310);
identifying, by a sensor device (110, 210), information about at least one passenger (S810) who is present in a host vehicle (500, 600, 700), the information including at least one of a location (S330) where the at least one passenger is seated, an age group of the at least one passenger (S340), or a combination thereof, when the host vehicle (500, 600, 700) enters a lock state;
performing, by an alarm device (120), a visual and audible alarm function (S350, S820) including at least one of a visual alarm function, an audible alarm function, or a combination thereof, when it is identified that the information about the at least one passenger, which is identified when the host vehicle (500, 600, 700) enters the lock state, meets a specified condition including at least one of a detection area of the at least one passenger, a detection height of the at least one passenger, or a combination thereof;
collecting, by an information collection device (130, 220), information (S410, S830) about the host vehicle (500, 600, 700) and information about a user of the host vehicle (500, 600, 700) when it is identified that the information about the at least one passenger, which is identified when the host vehicle (500, 600, 700) enters the lock state, meets the specified condition; and
identifying, by an action determination and control device (140, 230), based on at least one of the information about the at least one passenger, the information (S840) about the host vehicle (500, 600, 700), the information about the user, or a combination thereof, at least one action item (250) for control of the host vehicle (500, 600, 700), and
providing, by the action determination and control device, the user (S440, S840) with the at least one action item (250),
wherein collecting the information (S410, S830) by the information collection device (130, 220) includes collecting a separation distance between the user and the host vehicle when it is identified, based on whether at least one of the detection area, the detection height, or the combination thereof included in the specified condition is met, that the at least one passenger includes a child, and
wherein providing the at least one action item (250) to the user (S440, S840) by the action determination and control device (140, 230) includes transmitting, by the action determination and control device (140, 230), a user interface including the at least one action item (250) in form of an application screen information to execute at least one of control of air conditioning (251) of the host vehicle (500, 600, 700), control of starting of the host vehicle (500, 600, 700), control of at least one window (253) of the host vehicle (500, 600, 700), control of at least one door (255) of the host vehicle (500, 600, 700), digital key transmission, or a combination thereof to a terminal (257) of the user when it is identified that the separation distance is greater than a specified distance.

2. The rear seat passenger notification method of claim 1, wherein performing the visual and audible alarm function (S350, S820) by the alarm device (120) includes:
performing the visual and audible alarm function (S350, S820) when it is identified, based on whether at least one of the detection area, the detection height, or the combination thereof included in the specified condition is met, that the at least one passenger includes a child.

3. The rear seat passenger notification method of claim 1 or 2, wherein:
performing the visual and audible alarm function (S350, S820) by the alarm device (120) includes gradually strengthening and repeatedly performing the visual and audible alarm function (S430) when it is identified that the separation distance is less than the specified distance.

4. A rear seat passenger notification device (100), comprising:
a sensor device (110, 210) configured to identify information about at least one passenger who is present in a host vehicle when the host vehicle (500, 600, 700) enters a lock state, the information including at least one of a location where the at least one passenger is seated, an age group of the at least one passenger, or a combination thereof;
an alarm device (120) configured to perform a visual and audible alarm function including at least one of a visual alarm function, an audible alarm function, or a combination thereof, when it is identified that the information about the at least one passenger meets a specified condition including at least one of a detection area of the at least one passenger, a detection height of the at least one passenger, or a combination thereof;
an information collection device (130, 220) configured to collect information about the host vehicle (500, 600, 700) and information about a user of the host vehicle (500, 600, 700) when it is identified that the information about the at least one passenger meets the specified condition; and
an action determination and control device (140, 230) configured to:
identify, based on at least one of the information about the at least one passenger, the information about the host vehicle (500, 600, 700), the information about the user, or a combination thereof, at least one action item (250) for control of the host vehicle (500, 600, 700), and
provide the user with the at least one action item (250),
wherein:
the information collection device (100) is configured to collect a separation distance between the user and the host vehicle (500, 600, 700) when it is identified, based on whether at least one of the detection area, the detection height, or the combination thereof included in the specified condition is met, that the at least one passenger includes a child, and
the action determination and control device (140, 230) is configured to transmit a user interface including the at least one action item (250) in form of an application screen information to execute at least one of control of air conditioning (251) of the host vehicle (500, 600, 700), control of starting of the host vehicle (500, 600, 700), control of at least one window (253) of the host vehicle (500, 600, 700), control of at least one door (255) of the host vehicle (500, 600, 700), digital key transmission, or a combination thereof to a terminal (257) of the user when it is identified that the separation distance is greater than a specified distance, and
wherein the rear seat passenger notification device (100) further comprises:
at least one processor (1100); and
a memory (1300),
wherein the memory (1300) stores instructions, that cause, when executed by the processor (1100), the processor (1100) to carry out the rear seat passenger notification method of one of claims 1-3.

5. The rear seat passenger notification device (100) of claim 4, wherein the alarm device (120) is configured to perform the visual and audible alarm function when it is identified, based on whether at least one of the detection area, the detection height, or the combination thereof included in the specified condition is met, that the at least one passenger includes a child.

6. The rear seat passenger notification device (100) of claim 4 or 5, wherein:
the information collection device (130, 220) is configured to collect the separation distance between the user and the host vehicle (500, 600, 700) when it is identified, based on whether at least one of the detection area, the detection height, or the combination thereof included in the specified condition is met, that the at least one passenger includes a child, and
the alarm device (120) is configured to gradually strengthen and repeatedly perform the visual and audible alarm function when it is identified that the separation distance is less than the specified distance.

7. The rear seat passenger notification device (100) of one of claims 4-6, wherein the action determination and control device (140, 230) is configured to:
execute one of control of air conditioning of the host vehicle, control of at least one window of the host vehicle (500, 600, 700), control of at least one door of the host vehicle (500, 600, 700), or a combination thereof such that an interior temperature of the host vehicle (500, 600, 700), the interior temperature being included in the information of the host vehicle (500, 600, 700), decreases when it is identified that the interior temperature is greater than or equal to a first temperature, and
execute one of the control of air conditioning of the host vehicle (500, 600, 700), the control of the at least one window of the host vehicle (500, 600, 700), the control of the at least one door of the host vehicle (500, 600, 700), or the combination thereof such that the interior temperature of the host vehicle, the interior temperature being included in the information of the host vehicle (500, 600, 700), increases when it is identified that the interior temperature is less than a second temperature lower than the first temperature.

8. The rear seat passenger notification device (100) of one of claims 4-7, wherein the action determination and control device (140, 230) is configured to transmit a digital key of the host vehicle (500, 600, 700) to a terminal of an external user adjacent to the host vehicle (500, 600, 700) when presence of the external user is identified by means of adjacent information of the host vehicle (500, 600, 700), the adjacent information being included in the information of the host vehicle (500, 600, 700).

9. The rear seat passenger notification device (100) of one of claims 4-8, wherein:
the sensor device (110, 210) is configured to:
divide an interior of the host vehicle (500, 600, 700) into a plurality of areas (561, 562, 563, 564, 661, 662, 663, 664) based on a field of view (FOV) of at least one sensor (511, 513, 611, 613, 711, 713) included in the sensor device (110, 210), and
identify information of the at least one passenger with respect to each of the plurality of areas (561, 562, 563, 564, 661, 662, 663, 664), and
the action determination and control device (140, 230) is configured to:
identify the location where the at least one passenger is seated among the plurality of areas (561, 562, 563, 564, 661, 662, 663, 664), and
provide the user with the at least one action item (250) to execute at least one of air conditioning control, window control, door control, or a combination thereof in an area adjacent to the location.

10. The rear seat passenger notification device (100) of one of claims 4-9, wherein:
the sensor device (110, 210) is configured to identify that an external user adjacent to the host vehicle approaches the host vehicle using at least one camera, and
the action determination and control device (140, 230) is configured to:
continue setting all doors of the host vehicle (500, 600, 700) to the lock state, and
transmit information about the external user to the terminal of the user.

11. The rear seat passenger notification device (100) of one of claims 4-10, wherein the sensor device (110, 210) includes:
at least one camera configured to capture an area in front of the host vehicle (500, 600, 700), an area behind the host vehicle (500, 600, 700), and an area at a side of the host vehicle (500, 600, 700), and
at least one rear occupant alert (ROA) sensor configured to divide and identify an interior of the host vehicle (500, 600, 700) into a plurality of areas (561, 562, 563, 564, 661, 662, 663, 664) for each seat.

## Patentansprüche

1. Rücksitzfahrgast-Benachrichtigungsverfahren, das nacheinander aufweist:
Ermitteln, ob ein Host-Fahrzeug in einen Verriegelungszustand eintritt (S310),
Ermitteln, durch eine Sensorvorrichtung (110, 210), von Informationen über mindestens einen Fahrgast (S810), der sich in einem Host-Fahrzeug (500, 600, 700) befindet, wobei die Informationen mindestens eines von einem Ort (S330), wo der mindestens eine Fahrgast sitzt, einer Altersgruppe des mindestens einen Fahrgastes (S340) oder eine Kombination davon aufweisen, wenn das Host-Fahrzeug (500, 600, 700) in einen Verriegelungszustand eintritt,
Ausführen, durch eine Alarmvorrichtung (120), einer visuellen und akustischen Alarmfunktion (S350, S820), die mindestens eines von einer visuellen Alarmfunktion, einer akustischen Alarmfunktion oder eine Kombination davon aufweist, wenn ermittelt wird, dass die Informationen über den mindestens einen Fahrgast, die beim Eintreten des Host-Fahrzeugs (500, 600, 700) in den Verriegelungszustand ermittelt werden, eine festgelegte Bedingung erfüllen, die mindestens eines von einem Detektionsbereich des mindestens einen Fahrgastes, einer Detektionshöhe des mindestens einen Fahrgastes oder eine Kombination davon aufweist,
Sammeln, durch eine Informationssammelvorrichtung (130, 220), von Informationen (S410, S830) über das Host-Fahrzeug (500, 600, 700) und von Informationen über einen Benutzer des Host-Fahrzeugs (500, 600, 700), wenn ermittelt wird, dass die Informationen über den mindestens einen Fahrgast, die beim Eintreten des Host-Fahrzeugs (500, 600, 700) in den Verriegelungszustand ermittelt werden, die festgelegte Bedingung erfüllen, und
Ermitteln, durch eine Aktionsermittlungs- und Steuervorrichtung (140, 230), auf der Grundlage von mindestens einem von den Informationen über den mindestens einen Fahrgast, den Informationen (S840) über das Host-Fahrzeug (500, 600, 700), den Informationen über den Benutzer oder einer Kombination davon, mindestens eines Aktionselements (250) zur Steuerung des Host-Fahrzeugs (500, 600, 700), und
Bereitstellen, durch die Aktionsermittlungs- und -Steuervorrichtung, des mindestens einen Aktionselements (250) an den Benutzer (S440, S840),
wobei das Sammeln der Informationen (S410, S830) durch die Informationssammelvorrichtung (130, 220) das Sammeln eines Trennungsabstands zwischen dem Benutzer und dem Host-Fahrzeug aufweist, beim Ermitteln davon, dass der mindestens eine Fahrgast ein Kind miteinschließt, basierend darauf, ob mindestens eines von dem Detektionsbereich, der Detektionshöhe oder dder Kombination davon, die in der festgelegten Bedingung enthalten sind, erfüllt ist, und
wobei das Bereitstellen des mindestens einen Aktionselements (250) an den Benutzer (S440, S840) durch die Aktionsermittlungs- und -Steuervorrichtung (140, 230) das Übermitteln, durch die Aktionsermittlungs- und -Steuervorrichtung (140, 230), einer Benutzerschnittstelle, die das mindestens eine Aktionselement (250) in Form von Anwendungsbildschirm-Informationen aufweist, um mindestens eines von einem Steuern der Klimaanlage (251) des Host-Fahrzeugs (500, 600, 700), einem Steuern des Startens des Host-Fahrzeugs (500, 600, 700), einem Steuern von mindestens einem Fenster (253) des Host-Fahrzeugs (500, 600, 700), einem Steuern von mindestens einer Tür (255) des Host-Fahrzeugs (500, 600, 700), einer Übertragung eines digitalen Schlüssels oder einer Kombination davon auszuführen, an ein Endgerät (257) des Benutzers aufweist, wenn ermittelt wird, dass der Trennungsabstand größer als ein festgelegter Abstand ist.

2. Rücksitzfahrgast-Benachrichtigungsverfahren gemäß Anspruch 1, wobei das Ausführen der visuellen und akustischen Alarmfunktion (S350, S820) durch die Alarmvorrichtung (120) aufweist:
Ausführen der visuellen und akustischen Alarmfunktion (S350, S820), wenn ermittelt wird, dass der mindestens eine Fahrgast ein Kind miteinschließt, basierend darauf, ob mindestens eines von dem Detektionsbereich, der Detektionshöhe oder der Kombination davon, die in der festgelegten Bedingung enthalten sind, erfüllt ist.

3. Rücksitzfahrgast-Benachrichtigungsverfahren gemäß Anspruch 1 oder 2, wobei:
das Ausführen der visuellen und akustischen Alarmfunktion (S350, S820) durch die Alarmvorrichtung (120) ein allmähliches Verstärken und wiederholtes Ausführen der visuellen und akustischen Alarmfunktion (S430) aufweist, wenn ermittelt wird, dass der Trennungsabstand kleiner als der festgelegte Abstand ist.

4. Rücksitzfahrgast-Benachrichtigungsvorrichtung (100), aufweisend:
eine Sensorvorrichtung (110, 210), die konfiguriert ist, um Informationen über mindestens einen Fahrgast zu ermitteln, der sich in einem Host-Fahrzeug befindet, wenn das Host-Fahrzeug (500, 600, 700) in einen Verriegelungszustand eintritt, wobei die Informationen mindestens eines von einem Ort, wo der mindestens eine Fahrgast sitzt, einer Altersgruppe des mindestens einen Fahrgastes oder einer Kombination davon aufweisen,
eine Alarmvorrichtung (120), die konfiguriert ist, um eine visuelle und akustische Alarmfunktion auszuführen, die mindestens eines von einer visuellen Alarmfunktion, einer akustischen Alarmfunktion oder einer Kombination davon aufweist, wenn ermittelt wird, dass die Informationen über den mindestens einen Fahrgast eine festgelegte Bedingung erfüllen, die mindestens eines von einem Detektionsbereich des mindestens einen Fahrgastes, einer Detektionshöhe des mindestens einen Fahrgastes oder einer Kombination davon aufweist,
eine Informationssammelvorrichtung (130, 220), die konfiguriert ist, um Informationen über das Host-Fahrzeug (500, 600, 700) und Informationen über einen Benutzer des Host-Fahrzeugs (500, 600, 700) zu sammeln, wenn ermittelt wird, dass die Informationen über den mindestens einen Fahrgast die festgelegte Bedingung erfüllen, und
eine Aktionsermittlungs- und -Steuervorrichtung (140, 230), die konfiguriert ist, um:
basierend auf mindestens einem von den Informationen über den mindestens einen Fahrgast, den Informationen über das Host-Fahrzeug (500, 600, 700), den Informationen über den Benutzer oder einer Kombination davon mindestens ein Aktionselement (250) zur Steuerung des Host-Fahrzeugs (500, 600, 700) zu ermitteln und
dem Benutzer das mindestens eine Aktionselement (250) bereitzustellen,
wobei:
die Informationssammelvorrichtung (100) konfiguriert ist, um einen Trennungsabstand zwischen dem Benutzer und dem Host-Fahrzeug (500, 600, 700) zu sammeln, wenn ermittelt wird, dass der mindestens eine Fahrgast ein Kind miteinschließt, basierend darauf, ob mindestens eines von dem Detektionsbereich, der Detektionshöhe oder der Kombination davon, die in der festgelegten Bedingung enthalten sind, erfüllt ist, und
die Aktionsermittlungs- und -Steuervorrichtung (140, 230) konfiguriert ist zum Übermitteln einer Benutzerschnittstelle, die das mindestens eine Aktionselement (250) in Form von Anwendungsbildschirm-Informationen aufweist, um mindestens eines von einem Steuern der Klimaanlage (251) des Host-Fahrzeugs (500, 600, 700), einem Steuern des Startens des Host-Fahrzeugs (500, 600, 700), einem Steuern mindestens eines Fensters (253) des Host-Fahrzeugs (500, 600, 700), einem Steuern mindestens einer Tür (255) des Host-Fahrzeugs (500, 600, 700), einer Übertragung eines digitalen Schlüssels oder einer Kombination davon auszuführen, an ein Endgerät (257) des Benutzers, wenn ermittelt wird, dass der Trennungsabstand größer als ein vorgegebener Abstand ist, und
wobei die Rücksitzfahrgast-Benachrichtigungsvorrichtung (100) ferner aufweist:
mindestens einen Prozessor (1100) und
einen Speicher (1300),
wobei der Speicher (1300) Befehle speichert, die bei Ausführung durch den Prozessor (1100) bewirken, dass der Prozessor (1100) das Rücksitzfahrgast-Benachrichtigungsverfahren gemäß einem der Ansprüche 1 bis 3 ausführt.

5. Rücksitzfahrgast-Benachrichtigungsvorrichtung (100) gemäß Anspruch 4, wobei die Alarmvorrichtung (120) konfiguriert ist, um die visuelle und akustische Alarmfunktion auszuführen, wenn ermittelt wird, dass der mindestens eine Fahrgast ein Kind miteinschließt, basierend darauf, ob mindestens eines von dem Detektionsbereich, der Detektionshöhe oder die Kombination davon, die in der festgelegten Bedingung enthalten sind, erfüllt ist.

6. Rücksitzfahrgast-Benachrichtigungsvorrichtung (100) gemäß Anspruch 4 oder 5, wobei:
die Informationssammelvorrichtung (130, 220) konfiguriert ist, um den Trennungsabstand zwischen dem Benutzer und dem Host-Fahrzeug (500, 600, 700) zu sammeln, wenn ermittelt wird, dass der mindestens eine Fahrgast ein Kind miteinschließt, basierend darauf, ob mindestens eines von dem Detektionsbereich, der Detektionshöhe oder der Kombination davon, die in der festgelegten Bedingung enthalten sind, erfüllt ist, und
die Alarmvorrichtung (120) konfiguriert ist, um die visuelle und akustische Alarmfunktion allmählich zu verstärken und wiederholt auszuführen, wenn ermittelt wird, dass der Trennungsabstand kleiner als der festgelegte Abstand ist.

7. Rücksitzfahrgast-Benachrichtigungsvorrichtung (100) gemäß einem der Ansprüche 4 bis 6, wobei die Aktionsermittlungs- und -Steuervorrichtung (140, 230) konfiguriert ist, um:
eines von einem Steuern einer Klimaanlage des Host-Fahrzeugs, einem Steuern von mindestens einem Fenster des Host-Fahrzeugs (500, 600, 700), einem Steuern mindestens einer Tür des Host-Fahrzeugs (500, 600, 700) oder einer Kombination davon auszuführen, so dass eine Innenraumtemperatur des Host-Fahrzeugs (500, 600, 700) sinkt, wenn ermittelt wird, dass die Innenraumtemperatur größer oder gleich einer ersten Temperatur ist, wobei die Innenraumtemperatur in den Informationen des Host-Fahrzeugs (500, 600, 700) enthalten ist, und
eines von dem Steuern der Klimaanlage des Host-Fahrzeugs (500, 600, 700), dem Steuern des mindestens einen Fensters des Host-Fahrzeugs (500, 600, 700), dem Steuern der mindestens einen Tür des Host-Fahrzeugs (500, 600, 700) oder einer Kombination davon auszuführen, so dass die Innenraumtemperatur des Host-Fahrzeugs steigt, wenn ermittelt wird, dass die Innenraumtemperatur kleiner als eine zweite Temperatur ist, die kleiner als die erste Temperatur ist, wobei die Innenraumtemperatur in den Informationen des Host-Fahrzeugs (500, 600, 700) enthalten ist.

8. Rücksitzfahrgast-Benachrichtigungsvorrichtung (100) gemäß einem der Ansprüche 4 bis 7, wobei die Aktionsermittlungs- und -Steuervorrichtung (140, 230) konfiguriert ist, um einen digitalen Schlüssel des Host-Fahrzeugs (500, 600, 700) an ein Endgerät eines externen Benutzers benachbart zum Host-Fahrzeug (500, 600, 700) zu übermitteln, wenn eine Anwesenheit des externen Benutzers anhand von benachbarten Informationen des Host-Fahrzeugs (500, 600, 700) ermittelt wird, wobei die benachbarten Informationen in den Informationen des Host-Fahrzeugs (500, 600, 700) enthalten sind.

9. Rücksitzfahrgast-Benachrichtigungsvorrichtung (100) gemäß einem der Ansprüche 4 bis 8, wobei:
die Sensorvorrichtung (110, 210) konfiguriert ist, um:
einen Innenraum des Host-Fahrzeugs (500, 600, 700) in eine Mehrzahl von Bereichen (561, 562, 563, 564, 661, 662, 663, 664) basierend auf einem Sichtfeld (FOV) mindestens eines in der Sensorvorrichtung (110, 210) enthaltenen Sensors (511, 513, 611, 613, 711, 713) zu unterteilen und
Informationen des mindestens einen Fahrgastes in Bezug auf jeden aus der Mehrzahl von Bereichen (561, 562, 563, 564, 661, 662, 663, 664) zu ermitteln, und
die Aktionsermittlungs- und -Steuervorrichtung (140, 230) konfiguriert ist, um:
den Ort, wo der mindestens eine Fahrgast sitzt, aus der Mehrzahl von Bereichen (561, 562, 563, 564, 661, 662, 663, 664) zu ermitteln und
dem Benutzer das mindestens eine Aktionselement (250) bereitzustellen, um mindestens eines von einer Klimaanlagensteuerung, einer Fenstersteuerung, einer Türsteuerung oder einer Kombination davon in einem Bereich benachbart zu dem Ort auszuführen.

10. Rücksitzfahrgast-Benachrichtigungsvorrichtung (100) gemäß einem der Ansprüche 4 bis 9, wobei:
die Sensorvorrichtung (110, 210) konfiguriert ist, um mittels mindestens einer Kamera zu ermitteln, dass sich ein externer Benutzer benachbart zu dem Host-Fahrzeug dem Host-Fahrzeug nähert, und
die Aktionsermittlungs- und -Steuervorrichtung (140, 230) konfiguriert ist, um:
ein Setzen aller Türen des Host-Fahrzeugs (500, 600, 700) in den Verriegelungszustand fortzusetzen und
Informationen über den externen Benutzer an das Endgerät des Benutzers zu übermitteln.

11. Rücksitzfahrgast-Benachrichtigungsvorrichtung (100) gemäß einem der Ansprüche 4 bis 10, wobei die Sensorvorrichtung (110, 210) aufweist:
mindestens eine Kamera, die konfiguriert ist, um einen Bereich vor dem Host-Fahrzeug (500, 600, 700), einen Bereich hinter dem Host-Fahrzeug (500, 600, 700) und einen Bereich an einer Seite des Host-Fahrzeugs (500, 600, 700) zu erfassen, und
mindestens einen Rücksitzinsassen-Alarm- (ROA-) -Sensor, der konfiguriert ist, um einen Innenraum des Host-Fahrzeugs (500, 600, 700) in eine Mehrzahl von Bereichen (561, 562, 563, 564, 661, 662, 663, 664) für jeden Sitz zu unterteilen und zu identifizieren.

## Revendications

1. Procédé de notification de passager de siège arrière, comprenant séquentiellement :
le fait d'identifier si un véhicule hôte entre dans un état de verrouillage (S310) ;
l'identification, par un dispositif capteur (110, 210), d'informations concernant au moins un passager (S810) présent dans un véhicule hôte (500, 600, 700), les informations comprenant au moins l'un parmi un emplacement (S330) où ledit au moins un passager est assis, une tranche d'âge dudit au moins un passager (S340), ou une combinaison de ceux-ci, lorsque le véhicule hôte (500, 600, 700) entre dans un état de verrouillage ;
l'exécution, par un dispositif d'alarme (120), d'une fonction d'alarme visuelle et sonore (S350, S820) comprenant au moins l'une parmi une fonction d'alarme visuelle, une fonction d'alarme sonore, ou une combinaison de celles-ci, lorsqu'il est identifié que les informations concernant ledit au moins un passager, identifiées lorsque le véhicule hôte (500, 600, 700) entre dans l'état de verrouillage, répondent à une condition spécifiée comprenant au moins l'une parmi une zone de détection dudit au moins un passager, une hauteur de détection dudit au moins un passager, ou une combinaison de celles-ci ;
la collecte, par un dispositif de collecte d'informations (130, 220), d'informations (S410, S830) concernant le véhicule hôte (500, 600, 700) et d'informations concernant un utilisateur du véhicule hôte (500, 600, 700) lorsqu'il est identifié que les informations concernant ledit au moins un passager, identifiées lorsque le véhicule hôte (500, 600, 700) entre dans l'état de verrouillage, répondent à la condition spécifiée ; et
l'identification, par un dispositif de détermination et de contrôle d'actions (140, 230), sur la base d'au moins l'une des informations concernant ledit au moins un passager, des informations (S840) concernant le véhicule hôte (500, 600, 700), des informations concernant l'utilisateur, ou une combinaison de celles-ci, d'au moins un élément d'action (250) pour le contrôle du véhicule hôte (500, 600, 700), et la fourniture, par le dispositif de détermination et de contrôle d'actions, dudit au moins un élément d'action (250) à l'utilisateur (S440, S840),
dans lequel la collecte des informations (S410, S830) par le dispositif de collecte d'informations (130, 220) comprend la collecte d'une distance de séparation entre l'utilisateur et le véhicule hôte lorsqu'il est identifié que ledit au moins un passager comprend un enfant, en fonction du fait qu'au moins l'une parmi la zone de détection, la hauteur de détection ou la combinaison de celles-ci incluses dans la condition spécifiée soit remplie ou non, et
dans lequel la fourniture dudit au moins un élément d'action (250) à l'utilisateur (S440, S840) par le dispositif de détermination et de contrôle d'actions (140, 230) comprend la transmission, par le dispositif de détermination et de contrôle d'actions (140, 230), d'une interface utilisateur comprenant ledit au moins un élément d'action (250) sous la forme d'une information d'écran d'application permettant d'exécuter au moins l'un parmi un contrôle de la climatisation (251) du véhicule hôte (500, 600, 700), un contrôle du démarrage du véhicule hôte (500, 600, 700), un contrôle d'au moins une vitre (253) du véhicule hôte (500, 600, 700), un contrôle d'au moins une porte (255) du véhicule hôte (500, 600, 700), une transmission de clé numérique, ou une combinaison de ceux-ci vers un terminal (257) de l'utilisateur lorsqu'il est identifié que la distance de séparation est supérieure à une distance spécifiée.

2. Procédé de notification de passager de siège arrière selon la revendication 1, dans lequel l'exécution de la fonction d'alarme visuelle et sonore (S350, S820) par le dispositif d'alarme (120) comprend :
l'exécution de la fonction d'alarme visuelle et sonore (S350, S820) lorsqu'il est identifié que ledit au moins un passager comprend un enfant, en fonction du fait qu'au moins l'une parmi la zone de détection, la hauteur de détection ou la combinaison de celles-ci incluses dans la condition spécifiée soit remplie ou non.

3. Procédé de notification de passager de siège arrière selon la revendication 1 ou 2, dans lequel :
l'exécution de la fonction d'alarme visuelle et sonore (S350, S820) par le dispositif d'alarme (120) comprend le renforcement progressif et l'exécution répétée de la fonction d'alarme visuelle et sonore (S430) lorsqu'il est identifié que la distance de séparation est inférieure à la distance spécifiée.

4. Dispositif de notification de passager de siège arrière (100), comprenant :
un dispositif capteur (110, 210) configuré pour identifier des informations concernant au moins un passager présent dans un véhicule hôte lorsque ledit véhicule hôte (500, 600, 700) entre dans un état de verrouillage, les informations comprenant au moins l'un parmi un emplacement où ledit au moins un passager est assis, une tranche d'âge dudit au moins un passager, ou une combinaison de ceux-ci ;
un dispositif d'alarme (120) configuré pour exécuter une fonction d'alarme visuelle et sonore comprenant au moins l'une parmi une fonction d'alarme visuelle, une fonction d'alarme sonore ou une combinaison de celles-ci, lorsqu'il est identifié que les informations concernant ledit au moins un passager répondent à une condition spécifiée comprenant au moins l'une parmi une zone de détection dudit au moins un passager, une hauteur de détection dudit au moins un passager, ou une combinaison de celles-ci ;
un dispositif de collecte d'informations (130, 220) configuré pour collecter des informations concernant le véhicule hôte (500, 600, 700) et des informations concernant un utilisateur du véhicule hôte (500, 600, 700) lorsqu'il est identifié que les informations concernant ledit au moins un passager répondent à la condition spécifiée ; et
un dispositif de détermination et de contrôle d'actions (140, 230) configuré pour :
identifier, sur la base d'au moins l'une des informations concernant ledit au moins un passager, des informations concernant le véhicule hôte (500, 600, 700), les informations concernant l'utilisateur, ou une combinaison de celles-ci, au moins un élément d'action (250) pour le contrôle du véhicule hôte (500, 600, 700), et
fournir à l'utilisateur ledit au moins un élément d'action (250),
dans lequel :
le dispositif de collecte d'informations (100) est configuré pour collecter une distance de séparation entre l'utilisateur et le véhicule hôte (500, 600, 700) lorsqu'il est identifié que ledit au moins un passager comprend un enfant, en fonction du fait qu'au moins l'une parmi la zone de détection, la hauteur de détection ou la combinaison de celles-ci incluses dans la condition spécifiée soit remplie ou non, et
le dispositif de détermination et de contrôle d'actions (140, 230) est configuré pour transmettre une interface utilisateur comprenant ledit au moins un élément d'action (250) sous la forme d'une information d'écran d'application afin d'exécuter au moins l'un parmi un contrôle de climatisation (251) du véhicule hôte (500, 600, 700), un contrôle du démarrage du véhicule hôte (500, 600, 700), un contrôle d'au moins une vitre (253) du véhicule hôte (500, 600, 700), un contrôle d'au moins une porte (255) du véhicule hôte (500, 600, 700), une transmission de clé numérique, ou une combinaison de ceux-ci, vers un terminal (257) de l'utilisateur lorsqu'il est identifié que la distance de séparation est supérieure à une distance spécifiée, et
dans lequel le dispositif de notification de passager de siège arrière (100) comprend en outre :
au moins un processeur (1100) ; et
une mémoire (1300),
dans lequel la mémoire (1300) stocke des instructions qui, lorsqu'elles sont exécutées par le processeur (1100), amènent le processeur (1100) à mettre en œuvre le procédé de notification de passager de siège arrière selon l'une des revendications 1 à 3.

5. Dispositif de notification de passager de siège arrière (100) selon la revendication 4, dans lequel le dispositif d'alarme (120) est configuré pour exécuter la fonction d'alarme visuelle et sonore lorsqu'il est identifié que ledit au moins un passager comprend un enfant, en fonction du fait qu'au moins l'une parmi la zone de détection, la hauteur de détection ou la combinaison de celles-ci incluses dans la condition spécifiée soit remplie ou non.

6. Dispositif de notification de passager de siège arrière (100) selon la revendication 4 ou 5, dans lequel :
le dispositif de collecte d'informations (130, 220) est configuré pour collecter la distance de séparation entre l'utilisateur et le véhicule hôte (500, 600, 700) lorsqu'il est identifié que ledit au moins un passager comprend un enfant, en fonction du fait qu'au moins l'une parmi la zone de détection, la hauteur de détection ou la combinaison de celles-ci incluses dans la condition spécifiée soit remplie ou non, et
le dispositif d'alarme (120) est configuré pour intensifier progressivement et exécuter de manière répétée la fonction d'alarme visuelle et sonore lorsqu'il est identifié que la distance de séparation est inférieure à la distance spécifiée.

7. Dispositif de notification de passager de siège arrière (100) selon l'une des revendications 4 à 6, dans lequel le dispositif de détermination et de contrôle d'actions (140, 230) est configuré pour :
exécuter l'un parmi un contrôle de climatisation du véhicule hôte, un contrôle d'au moins une vitre du véhicule hôte (500, 600, 700), un contrôle d'au moins une porte du véhicule hôte (500, 600, 700), ou une combinaison de ceux-ci, de telle sorte qu'une température intérieure du véhicule hôte (500,600, 700), cette température intérieure étant incluse dans les informations du véhicule hôte (500, 600, 700), diminue lorsqu'il est identifié que la température intérieure est supérieure ou égale à une première température, et
exécuter l'un parmi le contrôle de climatisation du véhicule hôte (500, 600, 700), le contrôle de ladite au moins une vitre du véhicule hôte (500, 600, 700), le contrôle de ladite au moins une porte du véhicule hôte (500, 600, 700), ou une combinaison de ceux-ci, de telle sorte que la température intérieure du véhicule hôte, cette température intérieure étant incluse dans les informations du véhicule hôte (500, 600, 700), augmente lorsqu'il est identifié que la température intérieure est inférieure à une deuxième température inférieure à la première température.

8. Dispositif de notification de passager de siège arrière (100) selon l'une des revendications 4 à 7, dans lequel le dispositif de détermination et de contrôle d'actions (140, 230) est configuré pour transmettre une clé numérique du véhicule hôte (500, 600, 700) à un terminal d'un utilisateur externe adjacent au véhicule hôte (500, 600, 700) lorsque la présence de l'utilisateur externe est identifiée au moyen d'informations de proximité du véhicule hôte (500, 600, 700), lesdites informations de proximité étant incluses dans les informations du véhicule hôte (500, 600, 700).

9. Dispositif de notification de passager de siège arrière (100) selon l'une des revendications 4 à 8, dans lequel :
le dispositif capteur (110, 210) est configuré pour :
diviser un intérieur du véhicule hôte (500, 600, 700) en une pluralité de zones (561, 562, 563, 564, 661, 662, 663, 664) en fonction d'un champ de vision (FOV) d'au moins un capteur (511, 513, 611, 613, 711, 713) inclus dans le dispositif capteur (110, 210), et
identifier des informations dudit au moins un passager par rapport à chacune de la pluralité de zones (561, 562, 563, 564, 661, 662, 663, 664), et
le dispositif de détermination et de contrôle d'actions (140, 230) est configuré pour :
identifier l'emplacement où ledit au moins un passager est assis parmi la pluralité de zones (561, 562, 563, 564, 661, 662, 663, 664), et
fournir à l'utilisateur ledit au moins un élément d'action (250) pour exécuter au moins l'un parmi le contrôle de climatisation, le contrôle de vitres, le contrôle de portes ou une combinaison de ceux-ci dans une zone adjacente à l'emplacement.

10. Dispositif de notification de passager de siège arrière (100) selon l'une des revendications 4 à 9, dans lequel :
le dispositif capteur (110, 210) est configuré pour identifier, en utilisant au moins une caméra, qu'un utilisateur externe adjacent au véhicule hôte s'approche du véhicule hôte, et
le dispositif de détermination et de contrôle d'actions (140, 230) est configuré pour :
poursuivre la configuration de toutes les portes du véhicule hôte (500, 600, 700) à l'état de verrouillage, et
transmettre des informations concernant l'utilisateur externe au terminal de l'utilisateur.

11. Dispositif de notification de passager de siège arrière (100) selon l'une des revendications 4 à 10, dans lequel le dispositif capteur (110, 210) comprend :
au moins une caméra configurée pour capturer une zone située à l'avant du véhicule hôte (500, 600, 700), une zone située à l'arrière du véhicule hôte (500, 600, 700), et une zone sur un côté du véhicule hôte (500, 600, 700), et
au moins un capteur d'alerte de passager arrière (ROA) configuré pour diviser et identifier un intérieur du véhicule hôte (500, 600, 700) en une pluralité de zones (561, 562, 563, 564, 661, 662, 663, 664) pour chaque siège.
